# EUROPÄISCHE PATENTANMELDUNG

(11) **EP 4 462 106 A1**
(43) Veröffentlichungstag der Anmeldung: **13.11.2024**
(21) Anmeldenummer: 24174947.2
(22) Anmeldetag: 08.05.2024
(51) Int. Cl.: G01N 21/954, B25J 9/00, B25J 11/00, G02B 23/00, F16L 55/46, G01M 3/00, G01N 21/95

(54) **SYSTEM UND VERFAHREN ZUM STEUERN EINER KAMERA EINES KANALINSPEKTIONS- UND/ODER WARTUNGSSYSTEMS**

(30) Priorität: 09.05.2023 DE 102023112061
(71) Anmelder: iPEK International GmbH, 87477 Sulzberg (DE)
(72) Erfinder: Tozzo, Fabrizio, 87787 Wolfertschwenden (DE); Kumar, Rajeesh, 87437 Kempten (DE); Talha, Muhammad, 87471 Durach (DE)
(74) Vertreter: 2s-ip Schramm Schneider Bertagnoll Patent- und Rechtsanwälte Part mbB

(57) **Zusammenfassung**

Bereitgestellt wird ein Kanalinspektions- und/oder Wartungssystems, das zumindest umfasst:
- eine Bildaufnahmeeinrichtung, die über ein Gelenksystem an einem Fahrwagen oder an einer Schiebeeinrichtung des Kanalinspektions- und/oder Wartungssystems angeordnet ist, wobei das Gelenksystem angepasst ist, Schwenkbewegungen in zumindest zwei Richtungen durchzuführen, zum Schwenken der Bildaufnahmeeinrichtung in eine vorbestimmte Richtung,
- eine Eingabeeinrichtung, die angepasst ist, einen Zielpunkt für eine durchzuführende Schwenkbewegung des Gelenksystems entgegenzunehmen, und
- eine Steuereinrichtung, die mit der Eingabeeinrichtung und mit dem Gelenksystem gekoppelt ist, und die angepasst ist,
- den von der Eingabeeinrichtung entgegengenommenen Zielpunkt entgegenzunehmen,
- Gelenkwinkel des Gelenksystems zu berechnen, die mit dem Zielpunkt der durchzuführenden Schwenkbewegung korrespondieren, und
- basierend auf den aktuellen Gelenkwinkeln und auf den berechneten Gelenkwinkeln Steuersignale zu ermitteln und diese an das Gelenksystem zu übermitteln, wobei die Steuersignale das Gelenksystem veranlassen, die durchzuführende Schwenkbewegung bis zum Zielpunkt vorzunehmen.

## Beschreibung

### Gebiet der Erfindung

Die Erfindung betrifft ein Kanalinspektions- und/oder Wartungssystems mit einer Bildaufnahmeeinrichtung, deren Ausrichtung gesteuert werden kann. Ferner betrifft die Erfindung ein Verfahren zum Ausrichten einer Bildaufnahmeeinrichtung eines Kanalinspektions- und/oder Wartungssystems.

### Hintergrund der Erfindung

In Kanalinspektions- und/oder Wartungssystemen werden Bildaufnahmeeinrichtungen (Kameras bzw. Videokameras) verwendet, um das Innere eines Rohres oder eines Kanals aufzunehmen. Nachfolgend werden Bildaufnahmeeinrichtung, Kamera und Videokamera gemeinsam als Kamera bezeichnet. Hierbei kann es notwendig sein, die Blickrichtung (optische Achse) der Kamera auszurichten, um beispielsweise einen am Rand des Blickfeldes oder einen außerhalb des Blickfeldes der Kamera liegenden Bereich genauer zu betrachten.

Um eine Kamera in jede beliebige Richtung auszurichten, können Gelenksysteme vorgesehen sein, an denen die Kamera angeordnet werden kann und die ein Schwenken der Kamera in zwei Richtungen (oben/unten bzw. links/rechts) ermöglichen. Die Gelenksysteme können hierbei entsprechende Stellmotoren aufweisen.

Zum Steuern des Gelenksystems bzw. der Ausrichtung der Kamera, ist es bekannt, an einem Bedienpult, das außerhalb des Kanals bzw. Rohres angeordnet ist, und das mit dem sich in dem Kanal bzw. in dem Rohr befindlichen Kanalinspektions- und/oder Wartungssystemen gekoppelt ist, sogenannte Joysticks vorzusehen. Mit dem Joystick kann ein Bediener des Systems einen der beiden Stellmotoren des Gelenksystems steuern, d.h. er kann das Gelenksystem veranlassen die Kamera entweder nach rechts/links oder nach oben/unten zu schwenken. Um beispielsweise die optische Achse der Kamera nach rechts oben auszurichten, muss der Bediener zunächst den einen Stellmotor steuern, um die Kamera nach rechts auszurichten, und anschließend den anderen Stellmotor steuern, um die Kamera nach oben auszurichten. Er kann zwar auch eine Bewegung der Kamera schräg nach rechts oben veranlassen - diese Schwenkbewegung setzt sich allerdings aus mehreren Bewegungen nach rechts und aus mehreren Bewegungen nach oben zusammen. In beiden Fällen muss der Bediener die mechanischen Beschränkungen des Gelenksystems und/oder die Beschränkungen der Stellmotoren berücksichtigen, um die korrekte Joystickbewegung anzuwenden. Das bedeutet, dass der Bediener während der gesamten Schwenkbewegung vom Ausgangspunkt zur Zielrichtung bzw. zum Zielpunkt die Stellmotoren des Gelenksystems aktiv korrigieren muss, was sehr viel Zeit in Anspruch nehmen kann und im schlechtesten Falls auch zu Beschädigungen des Gelenksystems führen kann.

### Aufgabe der Erfindung

Aufgabe der Erfindung ist es daher, Lösungen bereitzustellen, die ein einfacheres und gleichzeitig schnelleres Ausrichten einer Bildaufnahmeeinrichtung eines Kanalinspektions- und/oder Wartungssystems ermöglichen.

### Erfindungsgemäße Lösung

Gelöst wird diese Aufgabe mit einem System und einem Verfahren nach den unabhängigen Ansprüchen. Vorteilhafte Ausgestaltung sind in den jeweiligen abhängigen Ansprüchen angegeben.

Bereit gestellt wird demnach ein Kanalinspektions- und/oder Wartungssystems, das zumindest umfasst:
- eine Bildaufnahmeeinrichtung, die über ein Gelenksystem an einem Fahrwagen oder an einer Schiebeeinrichtung des Kanalinspektions- und/oder Wartungssystems angeordnet ist, wobei das Gelenksystem angepasst ist, Schwenkbewegungen in zumindest zwei Richtungen durchzuführen, um die daran angeordnete Bildaufnahmeeinrichtung in eine vorbestimmte Richtung zu schwenken,
- eine Eingabeeinrichtung, die angepasst ist, einen Zielpunkt für eine durchzuführende Schwenkbewegung des Gelenksystems entgegenzunehmen, und
- eine Steuereinrichtung, die mit der Eingabeeinrichtung und mit dem Gelenksystem gekoppelt ist, und die angepasst ist,
   - den von der Eingabeeinrichtung entgegengenommenen Zielpunkt entgegenzunehmen,
   - Gelenkwinkel des Gelenksystems zu berechnen, die mit dem Zielpunkt der durchzuführenden Schwenkbewegung korrespondieren, und
   - basierend auf den aktuellen Gelenkwinkeln und auf den berechneten Gelenkwinkeln Steuersignale zu ermitteln und diese an das Gelenksystem zu übermitteln, wobei die Steuersignale das Gelenksystem veranlassen, die durchzuführende Schwenkbewegung bis zum Zielpunkt vorzunehmen.

Die Bildaufnahmeeinrichtung kann eine Kamera oder eine Videokamera sein.

Der Bediener muss dadurch an der Eingabeeirichtung lediglich einen Zielpunkt eingeben, zu dem die optische Achse der Bildaufnahmeeinrichtung ausgerichtet werden soll. Die Gelenkwinkel des Gelenksystems, die dem Zielpunkt entsprechen, werden automatisch von der Steuereinrichtung berechnet. Basierend auf diesen berechneten Gelenkwinkeln und den aktuellen Gelenkwinkeln des Gelenksystems ermittelt die Steuereinrichtung Steuerbefehlen, die das Gelenksystem veranlassen, eine Schwenkbewegung von der aktuellen Position hin zum Zielpunkt durchzuführen. Vorteilhaft hierbei ist insbesondere, dass der Bediener die Schwenkbewegung nicht mehr selbst durchführen muss, sondern lediglich den Zielpunkt der durchzuführenden Schwenkbewegung festlegen muss. Ein aktives Korrigieren / Justieren des Gelenksystems durch den Bediener entfällt vollständig und die Zielposition bzw. die gewünschte Ausrichtung der optischen Achse wird deutlich schneller erreicht.

Eine Schwenkbewegung umfasst hierbei sowohl ein Schwenken um eine Schwenkachse als auch ein Drehen um eine Drehachse. Je nach konkreter Ausgestaltung des Gelenksystems kann auch eine Kombination aus einem Schwenken um eine Schwenkachse und einem Drehen um eine Drehachse ein Schwenken der optischen Achse der Bildaufnahmeeinrichtung zu dem Zielpunkt hin bewirken.

Das Gelenksystem kann zumindest zwei Stellmotoren umfassen, wobei mit einem ersten Stellmotor eine Schwenkbewegung in eine erste Richtung und mit einem zweiten Stellmotor eine Schwenkbewegung in eine zweite Richtung durchführbar ist. Abhängig von der aktuellen Ausrichtung und der gewünschten Ausrichtung der optischen Achse ermittelt die Steuereinrichtung Steuersignale für beide Stellmotoren, wobei die Steuersignale
- den ersten Stellmotor des Gelenksystems veranlassen, die Schwenkbewegung in die erste Richtung vorzunehmen, und
- den zweiten Stellmotor des Gelenksystems veranlassen, die Schwenkbewegung in die zweite Richtung vorzunehmen,
wobei die Schwenkbewegungen in die erste Richtung und in die zweite Richtung der durchzuführenden Schwenkbewegung bis zum Zielpunkt entsprechen. Nach Abschluss / Beendigung der beiden Schwenkbewegungen durch die beiden Stellmotoren ist die optische Achse der Bildaufnahmeeinrichtung in die gewünschte Richtung, die durch den Zielpunkt festgelegt worden ist, ausgerichtet.

Vorteilhaft kann es sein, wenn die Steuersignale den ersten Stellmotor und den zweiten Stellmotor des Gelenksystems veranlassen die Schwenkbewegungen in die erste Richtung und in die zweite Richtung zumindest zeitweise parallel durchzuführen.

Damit kann die Dauer der Schwenkbewegung noch weiter reduziert werden, da die Schwenkbewegungen nach oben/unten mittels des einen Stellmotors und die Schwenkbewegung nach links/rechts mittels des anderen Stellmotors zeitgleich durchgeführt werden. Im Ergebnis entspricht der Pfad der Schwenkbewegung weitgehend der kürzesten Strecke zwischen der aktuellen Schwenkposition und der gewünschten Schwenkposition. Das während der Schwenkbewegung an einer Anzeigeeinrichtung angezeigtes Bild der Bildaufnahmeeinrichtung wirkt dadurch harmonisch, während bei dem aus dem Stand der Technik bekannten Systemen ein ruckartiges Bewegen hin zum Zielpunkt vermittelt wird.

Die Eingabeeinrichtung kann eine berührungsempfindliche Anzeigeeinrichtung umfassen, etwa ein Tablet, an der ein zweidimensionaler Rahmen angezeigt wird, wobei das Zentrum des Rahmens einer Neutralposition des Gelenksystems entspricht, und wobei jeder Punkt innerhalb des Rahmens einem Zielpunkt für eine durchzuführende Schwenkbewegung entspricht.

Der Bediener des Systems muss hierbei lediglich innerhalb des Rahmens tippen, um so den gewünschten Zielpunkt für die Schwenkbewegung festzulegen. Zusammen mit dem Rahmen kann auch das von der Bildaufnahmeeinrichtung bereitgestellt Bild angezeigt werden.

Hierbei kann es vorteilhaft sein, wenn durch einen Abstand des Zielpunktes zum Zentrum des Rahmens eine Schwenkposition des Gelenksystems in eine erste Richtung und durch den Drehwinkel des Zielpunktes bezogen auf das Zentrum des Rahmens eine Schwenkposition des Gelenksystems in eine zweite Richtung festlegbar sind. Der Bediener kann so bei der Festlegung des Zielpunktes durch ein Tippen innerhalb des Rahmens unterstützt werden.

Vorteilhaft kann es sein, wenn die Eingabeeinrichtung angepasst ist, fortlaufend Zielpunkte entgegenzunehmen, und die Steuereinrichtung angepasst ist, aus den fortlaufend entgegengenommenen Zielpunkten Gelenkwinkel des Gelenksystems zu berechnen und basierend auf den aktuellen Gelenkwinkeln und auf den berechneten Gelenkwinkeln Steuersignale zu ermitteln und diese an das Gelenksystem zu übermitteln.

Der Benutz kann so mehrfach (zeitlich) hintereinander jeweils verschiedene Zielpunkte festlegen, wobei die Steuereinrichtung nach jedem Festlegen eines neuen Zielpunktes neue Steuersignale für diesen neuen Zielpunkt und ausgehend von der aktuellen Ausrichtung des Gelenksystems ermittelt.

In einer besonderen Ausgestaltung der Erfindung kann es vorgesehen sein, dass die Eingabeeinrichtung eine zweidimensionale Geste erfasst (beispielsweise eine Kurve), wobei die Steuereinrichtung angepasst sein kann, die Steuersignale so zu ermitteln, dass diese ein Schwenken des Gelenksystems derart veranlassen, dass die optische Achse der Bildaufnahmeeinrichtung entlang der eingegebenen Geste folgt.

Die Steuereinrichtung kann angepasst sein, beim Ermitteln der Steuersignale die mechanischen Beschränkungen des Gelenksystems und/oder der Stellmotoren zu berücksichtigen.

So kann je nach mechanischer Ausgestaltung des Gelenksystems die Schwenkbewegung hin zum Zielpunkt entsprechend ermittelt werden.

Bereit gestellt wird ferner ein Verfahren zum Ausrichten einer Bildaufnahmeeinrichtung eines Kanalinspektions- und/oder Wartungssystems, wobei die Bildaufnahmeeinrichtung über ein Gelenksystem an einem Fahrwagen oder an einer Schiebeeinrichtung des Kanalinspektions- und/oder Wartungssystems angeordnet ist, wobei das Gelenksystem angepasst ist, Schwenkbewegungen in zumindest zwei Richtungen durchzuführen, um die daran angeordnete Bildaufnahmeeinrichtung in eine vorbestimmte Richtung auszurichten, wobei
- über eine Eingabeeinrichtung ein Zielpunkt für eine durchzuführende Schwenkbewegung des Gelenksystems entgegengenommen wird,
- eine Steuereinrichtung, die mit der Eingabeeinrichtung und mit dem Gelenksystem gekoppelt ist,
   - Gelenkwinkel des Gelenksystems berechnet, die mit dem Zielpunkt der durchzuführenden Schwenkbewegung korrespondieren, und
   - basierend auf den aktuellen Gelenkwinkeln und auf den berechneten Gelenkwinkeln Steuersignale für das Gelenksystem ermittelt, wobei mit den ermittelten Steuersignalen das Gelenksystem veranlasst wird, die durchzuführende Schwenkbewegung bis zum Zielpunkt vorzunehmen.

Das Gelenksystem kann zumindest zwei Stellmotoren umfassen, wobei basierend auf den ermittelten Steuersignalen
- der erste Stellmotor des Gelenksystems eine Schwenkbewegung in eine erste Richtung durchführt, und
- der zweite Stellmotor des Gelenksystems eine Schwenkbewegung in eine zweite Richtung durchführt,
wobei die - kombinierten - Schwenkbewegungen in die erste Richtung und in die zweite Richtung der durchzuführenden Schwenkbewegung bis zum Zielpunkt entsprechen.

Der erste Stellmotor und der zweite Stellmotor können ihre jeweiligen Schwenkbewegungen zumindest zeitweise parallel durchführen.

Die Eingabeeinrichtung kann eine berührungsempfindliche Anzeigeeinrichtung umfassen, wobei an der Anzeigeeinrichtung ein zweidimensionaler Rahmen angezeigt wird, wobei das Zentrum des Rahmens einer Neutralposition des Gelenksystems entspricht, wobei jeder Punkt innerhalb des Rahmens einem Zielpunkt für eine durchzuführende Schwenkbewegung entspricht, wobei durch einen Abstand des Zielpunktes zum Zentrum des Rahmens eine Schwenkposition des Gelenksystems in die erste Richtung und durch den Drehwinkel des Zielpunktes bezogen auf das Zentrum des Rahmens eine Schwenkposition des Gelenksystems in die zweite Richtung festgelegt werden.

Die Steuereinrichtung kann aus fortlaufend entgegengenommenen Zielpunkten fortlaufen Gelenkwinkel des Gelenksystems berechnen und basierend auf den aktuellen Gelenkwinkeln und auf den berechneten Gelenkwinkeln die Steuersignale ermitteln.

### Kurzbeschreibung der Figuren

Weitere Einzelheiten und Merkmale der Erfindung, sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1: ein Beispiel eines Gelenksystems mit einer daran angeordneten Bildaufnahmeeinrichtung; und
- Fig. 2: ein Blockschaltbild eines erfindungsgemäßen Systems; und
- Fig. 3: ein Beispiel einer Eingabeeinrichtung zur Steuerung der Ausrichtung eines Gelenksystems.

### Detaillierte Beschreibung der Erfindung

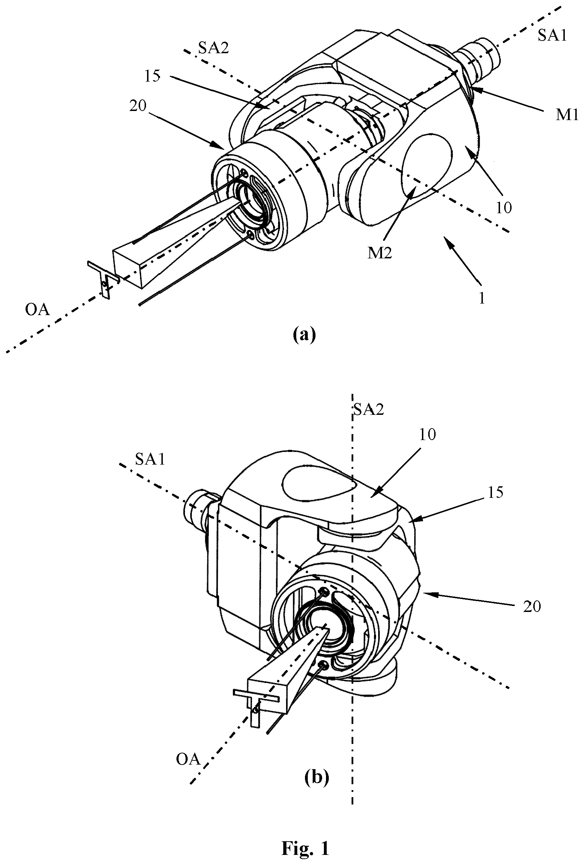

Fig. 1 zeigt ein Beispiel eines Gelenksystems 1 mit einer daran angeordneten Bildaufnahmeeinrichtung 20.

In der Abbildung (a) ist das Gelenksystem in einer Normalposition gezeigt, während in der Abbildung (b) das Gelenksystem in einer geschwenkten Position, die verschieden von der Normalposition ist, gezeigt ist.

Das Gelenksystem 1 umfasst hier eine erste Schwenkgabel 10, die beispielsweise an einem Inspektionswagen eines Kanalinspektionssystems befestigt werden kann. Die erste Schwenkgabel 10 ist um eine erste Schwenkachse SA1 schwenkbar, wobei in dem hier gezeigten konkreten Fall die erste Schwenkachse SA1 als Drehachse ausgebildet ist, um die die erste Schwenkgabel 10 um einen bestimmten Winkel drehbar ist, vorzugsweise in beide Richtungen um 360°.

In der ersten Schwenkgabel 10 ist eine zweite Schwenkgabel 15 angeordnet, wobei die zweite Schwenkgabel 15 um eine zweite Schwenkachse SA2 schwenkbar ist. In dem hier gezeigten Beispiel ist die zweite Schwenkgabel 15 relativ zur ersten Schwenkgabel 10 schwenkbar. Der maximale Schwenkwinkel der zweiten Schwenkgabel 15 wird im Wesentlichen durch die erste Schwenkgabel 10 begrenzt. Vorzugsweise ist das Gelenksystem so ausgestaltet, dass die zweite Schwenkgabel 15 aus der in Abbildung (a) gezeigten Normalstellung in beide Richtungen um mindestens 90° schwenkbar ist.

In der zweiten Schwenkgabel 15 wiederrum ist hier ein Kameramodul 20 (Bildaufnahmeeinrichtung) aufgenommen, sodass das Kameramodul 20 zusammen mit der zweiten Schwenkgabel 15 relativ zur ersten Schwenkgabel 10 geschwenkt werden kann. Zudem ist das Kameramodul 20 zusammen mit der zweiten Schwenkgabel 15 um die erste Schwenkachse SA1 schwenkbar bzw. drehbar. Damit lässt sich die optische Achse OA des Kameramoduls in jede Richtung ausrichten. Das Kameramodul selbst kann so ausgestaltet sein, dass es unabhängig von der Schwenkposition immer ein lagerichtiges Bild liefert.

Der ersten Schwenkgabel 10 ist ein erster Stellantrieb M1, etwa ein Stellmotor zugeordnet, der ausgestaltet ist, die erste Schwenkgabel 10 in eine vorbestimmte Richtung zu schwenken bzw. zu drehen. Der Schwenkweg bzw. der Drehwinkel hängt dabei von dem Zielpunkt ab, zu dem die optische Achse OA des Kameramodul ausgerichtet werden soll.

Der zweiten Schwenkgabel 15 ist ein zweiter Stellantrieb M2, etwa ein Stellmotor zugeordnet, der ausgestaltet ist, die zweite Schwenkgabel 15 in eine vorbestimmte Richtung zu schwenken bzw. zu drehen. Der Schwenkweg bzw. der Drehwinkel hängt dabei von dem Zielpunkt ab, zu dem die optische Achse OA des Kameramodul ausgerichtet werden soll.

Das in Fig. 1 gezeigte Gelenksystem ist nur ein mögliches Beispiel einer Ausgestaltung der Erfindung, mit der eine Kamera bzw. deren optische Achse geschwenkt werden kann. Andere Ausgestaltungen der beiden Schwenkgabeln und der Anordnung der beiden Schwenkgabeln relativ zueinander sind möglich und von der erfindungsgemäßen Lösung umfasst. Erfindungsgemäß wichtig ist lediglich, dass eine erste Einheit (z.B. die erste Schwenkgabel 10) des Gelenksystems in zwei Richtungen geschwenkt werden kann, und dass eine zweite Einheit (z.B. die zweite Schwenkgabel 15) des Gelenksystems ebenfalls in zwei Richtungen geschwenkt werden kann, wobei die Schwenkachsen der beiden Einheiten vorteilhafterweise senkrecht zueinanderstehen und wobei das Schwenken bzw. Drehen der beiden Einheiten jeweils von einem steuerbaren Schwenkmittel, etwa ein Stellmotor, bewirkt wird.

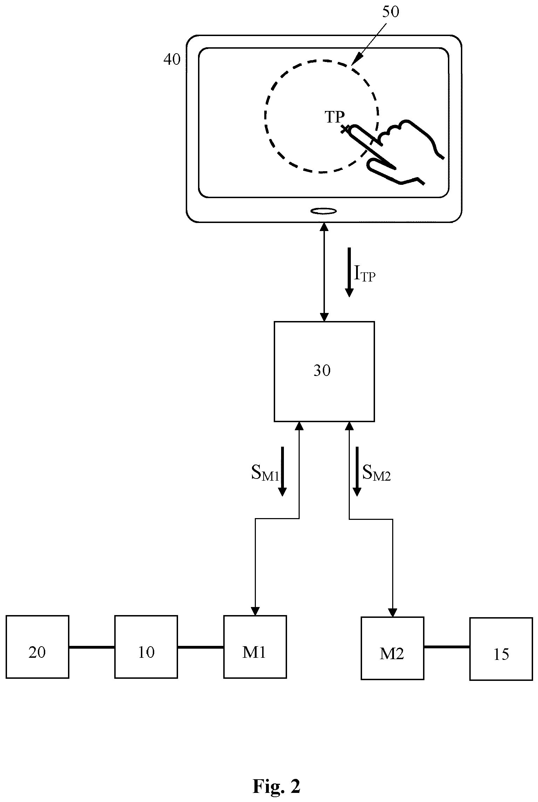

**Fig. 2** zeigt ein Blockschaltbild eines erfindungsgemäßen Systems.

An einer Eingabeeinrichtung 40, die hier ein Tablet ist, kann ein Bediener des Systems einen Zielpunkt TP eingeben, etwa mittels einer Touch-Geste. Der Zielpunkt gibt hierbei an, in welche Richtung die optische Achse OA des Kameramoduls ausgerichtet werden soll. An der Eingabeeinrichtung 40 kann ein zweidimensionaler Rahmen 50 angezeigt werden, der eine vereinfachte Darstellung des Raumes, innerhalb dessen die optische Achse OA ausgerichtet werden kann, repräsentiert.

Der eingegebene Zielpunkt TP, d.h. Informationen I_{TP} über den eingegebenen Zielpunkt TP, werden von der Eingabeeinrichtung 40 an eine Steuereinrichtung 30 übertragen. Die Steuereinrichtung 30 kann hierbei Bestandteil der Eingabeeinrichtung sein. Sie kann aber auch als eine separate Einheit ausgestaltet sein.

Die Steuereinrichtung 30, der die aktuelle Schwenkposition des Gelenksystems und damit die aktuelle Ausrichtung der optischen Achse OA bekannt ist, berechnet Gelenkwinkel (für das in Fig. 1 gezeigte Beispiel einen Schwenkwinkel für die erste Schwenkgabel und einen Schwenkwinkel für die zweite Schwenkgabel) für das Gelenksystem, bei denen der Zielpunkt TP auf der optischen Achse OA des Kamerasystems liegt, d.h. die Steuereinrichtung 30 berechnet Gelenkwinkel des Gelenksystems, die mit dem Zielpunkt der durchzuführenden Schwenkbewegung korrespondieren.

Weil der Steuereinrichtung 30 die aktuelle Schwenkposition des Gelenksystems und damit die aktuellen Gelenkwinkel bekannt ist bzw. sind, kann sie basierend auf den aktuellen Gelenkwinkeln und auf den berechneten Gelenkwinkeln Steuersignale ermitteln und diese an das Gelenksystem übermitteln, wobei die Steuersignale das Gelenksystem veranlassen, die durchzuführende Schwenkbewegung bis zum Zielpunkt vorzunehmen.

In einer konkreten Ausgestaltung ermittelt die Steuereinrichtung 30 Steuersignale S_{M1}, S_{M2} für die beiden Stelleinrichtungen bzw. Stellmotoren M1, M2. Mit den Steuersignalen S_{M1}, S_{M2} werden die Stellmotoren gesteuert, um das Gelenksystem auf die berechneten Gelenkwinkel einzustellen bzw. die optische Achse OA auf den Zielpunkt TP hin ausrichten. Der Vorteil hierbei liegt darin, dass beide Stellmotoren gleichzeitig betrieben werden können, sodass die Schwenkbewegung hin zum Zielpunkt deutlich schneller und zudem präziser abgewickelt werden kann als mittels einer manuellen Steuerung der Stellmotoren, bei der in der Regel immer nur ein Stellmotor aktiviert werden kann. Da der Weg von der aktuellen Ausrichtung hin zur gewünschten Ausrichtung (d.h. hin zum Zielpunkt TP) bekannt ist können die Stellmotoren so betrieben werden, dass sie eine optimale Beschleunigungskurve beschreiben. Das während der Schwenkbewegung des Gelenksystems an einer Anzeigeeinrichtung angezeigte Bild der Kamera 20 wirkt zu dem harmonisch, d.h. an der Anzeigeeinrichtung ist ein weitgehend ruckelfreies Bild zu sehen. Die Eingabeeinrichtung kann hier zugleich auch als Anzeigeeinrichtung ausgestaltet sein. Es ist aber auch möglich, dass Eingabeeinrichtung und Anzeigeeinrichtung getrennte Einheiten sind.

Die Stellmotoren M1, M2 sind jeweils mit einer Schwenkgabel bzw. Schwenkeinheit gekoppelt. In dem in Fig. 1 und Fig 2 gezeigten Beispiel der Erfindung sind der Stellmotor M1 mit der ersten Schwenkgabel 10 und der Stellmotor M2 mit der zweiten Schwenkgabel 15 gekoppelt, sodass die Stellmotoren die jeweilige Schwenkgabel entsprechend den Steuersignalen S_{M1}, S_{M2} schwenken können.

Die Steuereinrichtung 30 und die Stellmotoren M1, M2 sind optional auch so angepasst, dass die Stellmotoren ihre jeweilige Position bzw. Stellung an die Steuereinrichtung übermitteln können. Die jeweilige Stellung kann etwa mittels entsprechender Sensoren ermittelt werden.

Bei den Stellmotoren kann es sich um elektrische Stellantriebe handeln, etwa elektrische Dreh- und Schwenkantriebe.

Die Steuersignale können S_{M1}, S_{M2} können Information über die absolute einzustellende Position bzw. Ausrichtung der jeweiligen Schwenkgabel enthalten. Sobald die jeweilige Position erreicht wird, kann der jeweilige Stellmotor gestoppt werden.

In einer alternativen Ausgestaltung kann die Steuereinrichtung 30 so ausgebildet sein, dass sie dem jeweiligen Stellmotor so lange Steuersignale übermittelt, bis die gewünschte Position bzw. Ausrichtung erreicht wird. Die jeweils aktuelle Position kann die Steuereinrichtung von entsprechend ausgestalteten Sensoren abfragen.

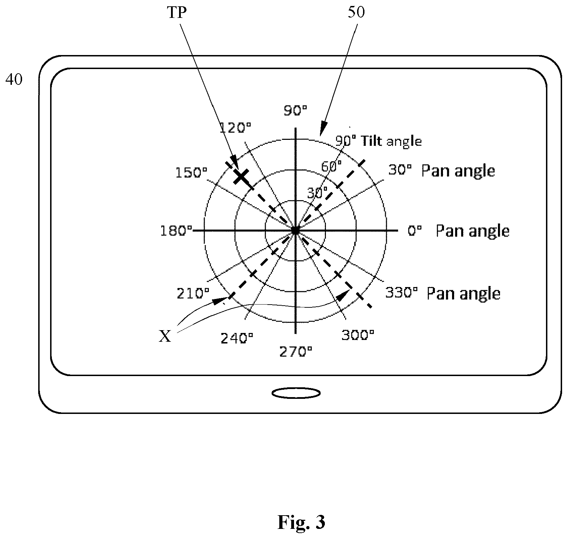

**Fig. 3** zeigt ein mögliches Beispiel einer Eingabeeinrichtung zur Steuerung der Ausrichtung eines Gelenksystems.

An einer Eingabeeinrichtung 40 wird hier ein zweidimensionaler Rahmen 50 angezeigt, der im Wesentlichen eine vereinfachte Darstellung des Raumes repräsentiert, innerhalb dessen die optische Achse OA ausgerichtet werden kann. Die optische Achse kann bei dem hier gezeigten Beispiel überall innerhalb des äußeren Kreises ausgerichtet werden, wobei das Zentrum der koaxialen Kreise die Neutralstellung des Gelenksystems repräsentieren kann.

Der Rahmen 50 (auch als Eingabeschablone bezeichnet), umfasst eine Anzahl (hier 3) konzentrische Kreise, und eine Anzahl von durch den Mittelpunkt verlaufenden geraden Linien, die jeweils einem vorbestimmten Winkel zueinander angeordnet sind (hier 12 Linien, die jeweils um 30° zueinander verlaufen).

Die geraden Linien repräsentieren hier einen ersten Schwenkwinkel (z.B. der ersten Schwenkgabel 10), der zwischen 0° und 360° liegen kann. Die konzentrischen Kreise repräsentieren hier einen zweiten Schwenkwinkel (z.B. der zweiten Schwenkgabel 15), der zwischen 0° und 90° liegen kann.

Bei dem in Fig. 3 beispielhaft gezeigten ausgewählten Zielpunkt TP muss die erste Schwenkgabel entsprechend dem ersten Schwenkwinkel (repräsentiert durch die geraden Linien) um etwa 135° aus der Normalstellung geschwenkt werden. Die zweite Schwenkgabel muss entsprechend dem zweiten Schwenkwinkel (repräsentiert durch die konzentrischen Kreise) um etwa 75° aus der Normalstellung geschwenkt werden. Nach Beendigung der beiden Schwenkbewegungen, die von dem Stellmotoren gleichzeitig durchgeführt werden können, ist die optische Achse OA der Kamera 20 so ausgerichtet, dass sie durch den (virtuellen) Zielpunkt TP verläuft bzw. auf den (virtuellen) Zielpunkt TP ausgerichtet ist.

Der auf der Eingabeeinrichtung gezeigte Rahmen ist nur optional und dient in erster Linie als Eingabehilfe. Die Steuerung des Gelenksystems an der Eingabeeinrichtung bzw. mittels der Eingabeeinrichtung kann auch ohne einen solchen Rahmen erfolgen. Möglich ist es beispielsweise, dass an der Eingabeeinrichtung ein aktuelles Bild des Raumes vor der Kamera angezeigt wird und der Bediener die gewünschte Ausrichtung der optischen Achse anhand dieses Bildes festlegt, etwa mittels einer Touch-Geste auf dieses Bild. Es kann aber hilfreich sein, die Normalposition des Gelenksystems und/oder die aktuelle Ausrichtung durch entsprechende Symbole darzustellen, etwa als Symbole, die dem angezeigten Bild überlagert werden. Angaben zu den aktuellen Schwenkwinkeln können auch in einem separaten Bereich an der Eingabeeinrichtung angezeigt werden.

Besonderer Vorteil der Erfindung ist, dass ein Bediener die gewünschte 3D-Zielrichtung (d.h. den Zielpunkt TP) mit Hilfe eines zweidimensionalen Rahmens auswählen kann, der auch durch das das aktuelle Kamerabild repräsentiert werden kann. Vorteilhaft kann es sein (falls erforderlich), dass ein äußerer Begrenzungsrahmen angezeigt wird, der die maximale mögliche Auslenkung einer Schwenkgabel repräsentiert. Kann eine Schwenkgabel beispielsweise nur max. 90° ausgelenkt bzw. verschwenkt werden, kann es vorteilhaft sein, bei dem in Fig. 3 gezeigten Beispiel zumindest den äußeren Kreis einzublenden. Dadurch kann verhindert werden, dass der Bediener Schwenkwinkel auswählt, die größer al 90° sind. Alternativ können solche unzulässigen Eingaben von der Eingabeeinrichtung auch einfach ignoriert werden.

In einer Ausgestaltung kann der Erfindung kann der Bediener auch eine zweidimensionale Geste an der Eingabeeinrichtung ausführen, indem er etwa einen Finger über die Eingabeeinrichtung führt. Diese Geste kann einen Pfad repräsentieren, dem die optische Achse der Kamera folgen soll. Die Steuereinrichtung ist in diesem Fall angepasst aus dem Pfad entsprechende Steueranweisungen für die Stelleinrichtungen bzw. Stellmotoren zu abzuleiten und den Stellmotoren zu übermitteln. Damit können spezielle Inspektionsszenarien abgebildet werden, beispielsweise eine Inspektion einer Kanalwandung von links oben nach links unten.

In Fig. 3 sind in dem Rahmen zwei Linien X gezeigt, die in einem 45° Winkel durch den Mittelpunkt des Rahmens verlaufen. Diese beiden Linien X repräsentieren Drehwinkel bzw. Schwenkwinkel, bei denen die Ausrichtung des von der Kamera aufgenommenen Bildes geändert wird, wenn während der Dreh- bzw. Schwenkbewegung diese Winkel überschritten werden, beispielsweise wenn eine Drehbewegung von 40° hinzu einer Drehposition von 50° durchgeführt wird. Dadurch wird gewährleistet, dass das von der Kamera aufgenommene Bild immer lagerichtig, d.h. aufrecht, angezeigt wird.

Die Erfindung ermöglicht es also eine Kamera mit einer einfachen Geste in eine beliebige Richtung auszurichten: oben-unten-links-rechts, ohne die mechanischen Gelenkbeschränkungen der angeschlossenen Kamera berücksichtigen zu müssen.

Vorstehend ist eine Gelenksystem beschrieben worden, an dem die Kamera angeordnet ist. Ein entsprechendes steuerbares Gelenksystem kann auch innerhalb einer Kamera angeordnet sein, um die Optik der Kamera entsprechend auszurichten.

## Patentansprüche

1. Kanalinspektions- und/oder Wartungssystems, das zumindest umfasst:
- eine Bildaufnahmeeinrichtung, die über ein Gelenksystem an einem Fahrwagen oder an einer Schiebeeinrichtung des Kanalinspektions- und/oder Wartungssystems angeordnet ist, wobei das Gelenksystem angepasst ist, Schwenkbewegungen in zumindest zwei Richtungen durchzuführen, um die daran angeordnete Bildaufnahmeeinrichtung in eine vorbestimmte Richtung zu schwenken,
- eine Eingabeeinrichtung, die angepasst ist, einen Zielpunkt für eine durchzuführende Schwenkbewegung des Gelenksystems entgegenzunehmen, und
- eine Steuereinrichtung, die mit der Eingabeeinrichtung und mit dem Gelenksystem gekoppelt ist, und die angepasst ist,
- den von der Eingabeeinrichtung entgegengenommenen Zielpunkt entgegenzunehmen,
- Gelenkwinkel des Gelenksystems zu berechnen, die mit dem Zielpunkt der durchzuführenden Schwenkbewegung korrespondieren, und
- basierend auf den aktuellen Gelenkwinkeln und auf den berechneten Gelenkwinkeln Steuersignale zu ermitteln und diese an das Gelenksystem zu übermitteln, wobei die Steuersignale das Gelenksystem veranlassen, die durchzuführende Schwenkbewegung bis zum Zielpunkt vorzunehmen.

2. System nach Anspruch 1, wobei das Gelenksystem zumindest zwei Stellmotoren umfasst, wobei mit einem ersten Stellmotor eine Schwenkbewegung in eine erste Richtung und mit einem zweiten Stellmotor eine Schwenkbewegung in eine zweite Richtung durchführbar ist.

3. System nach Anspruch 2, wobei die Steuersignale
- den ersten Stellmotor des Gelenksystems veranlassen, die Schwenkbewegung in die erste Richtung vorzunehmen, und
- den zweiten Stellmotor des Gelenksystems veranlassen, die Schwenkbewegung in die zweite Richtung vorzunehmen,
wobei die Schwenkbewegungen in die erste Richtung und in die zweite Richtung der durchzuführenden Schwenkbewegung bis zum Zielpunkt entsprechen.

4. System nach Anspruch 3, wobei die Steuersignale den ersten Stellmotor und den zweiten Stellmotor des Gelenksystems veranlassen die Schwenkbewegungen in die erste Richtung und in die zweite Richtung zumindest zeitweise parallel durchzuführen.

5. System nach Anspruch 1, wobei die Eingabeeinrichtung eine berührungsempfindliche Anzeigeeinrichtung umfasst, an der ein zweidimensionaler Rahmen angezeigt wird, wobei das Zentrum des Rahmens einer Neutralposition des Gelenksystems entspricht, wobei jeder Punkt innerhalb des Rahmens einem Zielpunkt für eine durchzuführende Schwenkbewegung entspricht.

6. System nach Anspruch 5, wobei durch einen Abstand des Zielpunktes zum Zentrum des Rahmens eine Schwenkposition des Gelenksystems in eine erste Richtung und durch den Drehwinkel des Zielpunktes bezogen auf das Zentrum des Rahmens eine Schwenkposition des Gelenksystems in eine zweite Richtung festlegbar sind.

7. System nach Anspruch 1, wobei die Eingabeeinrichtung angepasst ist, fortlaufend Zielpunkte entgegenzunehmen, und die Steuereinrichtung angepasst ist, aus den fortlaufend entgegengenommenen Zielpunkten Gelenkwinkel des Gelenksystems zu berechnen und basierend auf den aktuellen Gelenkwinkeln und auf den berechneten Gelenkwinkeln Steuersignale zu ermitteln und diese an das Gelenksystem zu übermitteln.

8. System nach Anspruch 2, wobei die Steuereinrichtung angepasst ist, beim Ermitteln der Steuersignale die mechanischen Beschränkungen des Gelenksystems und/oder der Stellmotoren zu berücksichtigen.

9. Verfahren zum Ausrichten einer Bildaufnahmeeinrichtung eines Kanalinspektions- und/oder Wartungssystems, wobei die Bildaufnahmeeinrichtung über ein Gelenksystem an einem Fahrwagen oder an einer Schiebeeinrichtung des Kanalinspektions- und/oder Wartungssystems angeordnet ist, wobei das Gelenksystem angepasst ist, Schwenkbewegungen in zumindest zwei Richtungen durchzuführen, um die daran angeordnete Bildaufnahmeeinrichtung in eine vorbestimmte Richtung auszurichten, wobei
- über eine Eingabeeinrichtung ein Zielpunkt für eine durchzuführende Schwenkbewegung des Gelenksystems entgegengenommen wird,
- eine Steuereinrichtung, die mit der Eingabeeinrichtung und mit dem Gelenksystem gekoppelt ist,
- Gelenkwinkel des Gelenksystems berechnet, die mit dem Zielpunkt der durchzuführenden Schwenkbewegung korrespondieren, und
- basierend auf den aktuellen Gelenkwinkeln und auf den berechneten Gelenkwinkeln Steuersignale für das Gelenksystem ermittelt, wobei mit den ermittelten Steuersignalen das Gelenksystem veranlasst wird, die durchzuführende Schwenkbewegung bis zum Zielpunkt vorzunehmen.

10. Verfahren nach Anspruch 9, wobei das Gelenksystem zumindest zwei Stellmotoren umfasst, wobei basierend auf den ermittelten Steuersignalen
- der erste Stellmotor des Gelenksystems eine Schwenkbewegung in eine erste Richtung durchführt, und
- der zweite Stellmotor des Gelenksystems eine Schwenkbewegung in eine zweite Richtung durchführt,
wobei die Schwenkbewegungen in die erste Richtung und in die zweite Richtung der durchzuführenden Schwenkbewegung bis zum Zielpunkt entsprechen.

11. Verfahren nach Anspruch 10, wobei der erste Stellmotor und der zweite Stellmotor ihre jeweiligen Schwenkbewegungen zumindest zeitweise parallel durchführen.

12. Verfahren nach Anspruch 9, wobei die Eingabeeinrichtung eine berührungsempfindliche Anzeigeeinrichtung umfasst, wobei an der Anzeigeeinrichtung ein zweidimensionaler Rahmen angezeigt wird, wobei das Zentrum des Rahmens einer Neutralposition des Gelenksystems entspricht, wobei jeder Punkt innerhalb des Rahmens einem Zielpunkt für eine durchzuführende Schwenkbewegung entspricht, wobei durch einen Abstand des Zielpunktes zum Zentrum des Rahmens eine Schwenkposition des Gelenksystems in die erste Richtung und durch den Drehwinkel des Zielpunktes bezogen auf das Zentrum des Rahmens eine Schwenkposition des Gelenksystems in die zweite Richtung festgelegt werden.

13. Verfahren nach Anspruch 9, wobei die Steuereinrichtung aus fortlaufend entgegengenommenen Zielpunkten Gelenkwinkel des Gelenksystems berechnet und basierend auf den aktuellen Gelenkwinkeln und auf den berechneten Gelenkwinkeln die Steuersignale ermittelt.

14. Verfahren nach Anspruch 10, wobei die Steuereinrichtung beim Ermitteln der Steuersignale die mechanischen Beschränkungen des Gelenksystems und/oder der Stellmotoren berücksichtigt.
